# FASCICULE DE BREVET EUROPEEN

(11) **EP 3 450 855 B1**
(45) Date de publication et mention de la délivrance du brevet: **22.06.2022**
(21) Numéro de dépôt: 18186649.2
(22) Date de dépôt: 31.07.2018
(51) Int. Cl.: F24C 15/02, A47B 77/02

(54) **MINI-FOUR AVEC UN ÉLÉMENT COUVRANT POUR L'OUVERTURE DE LA CAVITÉ DE CUISSON DU MINI-FOUR**
MINIOFEN MIT EINEM ABDECKELEMENT FÜR DIE ÖFFNUNG DES BACKRAUMS DES MINIOFENS
MINI-OVEN WITH A COVERING ELEMENT FOR THE OPENING OF THE COOKING CAVITY OF THE MINI-OVEN

(30) Priorité: 31.08.2017 FR 1758062; 28.03.2018 FR 1852708
(43) Date de publication de la demande: 06.03.2019
(73) Titulaire: SEB Asia Limited, Kowloon (HK)
(72) Inventeur: CHAN, Chi-Wah, Hong Kong (HK)
(74) Mandataire: SEB Développement

(56) Documents cités:
- JP-B2- 3 108 321
- US-A- 3 132 638

## Description

La présente invention concerne un mini-four avec un élément couvrant pour l' ouverture de la cavité de cuisson du mini-four.

Il est connu du document JP 3 108321 B2, un four sans porte mobile mais comprenant à la place un corps d'ouverture et un élément couvrant mobile inséré dans ce corps d'ouverture permettant d'occulter ou de découvrir la cavité intérieure du four.

Le document US 3 132 638 A décrit un mini-four connu dans l'art antérieur. Les fours comprennent une cavité ou chambre isolée sur le plan thermique et une porte pouvant être manipulée entre une position ouverte, dans laquelle il est possible d'accéder à la cavité de façon à pouvoir y placer des produits alimentaires, et une position fermée, dans laquelle la cavité est essentiellement isolée vis-à-vis de l'environnement extérieur et le four peut être mis en œuvre pour cuire les aliments. Il existe de nombreux types de fours, notamment les grands fours ménagers, les fours-grilloirs ou mini-fours.

Les mini-fours, en particulier, sont populaires dans les foyers possédant de petites cuisines où l'espace est limité. Les mini-fours comprennent un châssis essentiellement métallique qui définit une cavité de cuisson isolée sur le plan thermique et une porte permettant d'accéder à la cavité de cuisson de façon à pouvoir transférer les aliments entre la cavité de cuisson et l'extérieur du mini-four. La cavité de cuisson comprend au moins un élément chauffant électrique ou un filament qui génère de l'énergie thermique lors du passage de courant électrique afin de cuire les aliments présents dans la cavité de cuisson. Une ou plusieurs grilles peuvent être incluses dans la cavité de cuisson afin de supporter les aliments à diverses hauteurs à l'intérieur de la cavité de cuisson de telle sorte que diverses opérations de cuisson, telles que rôtissage, grill ou cuisson au four générale, puissent être effectuées.

Bien que la taille des mini-fours varie, ils sont généralement conçus pour accueillir des aliments de petite taille tels que des tranches de pain, des bagels, des légumes, une pizza, des cookies et des cupcakes. Cependant, pour certains mini-fours de plus grande taille, la cavité de cuisson peut accueillir de plus grands aliments tels que des poulets et des rôtis.

Comme avec la plupart des fours, le procédé de cuisson implique un préchauffage de la cavité de cuisson jusqu'à une température souhaitée ou visée à laquelle les aliments peuvent être cuits d'une manière optimale. Une fois la température visée atteinte, la porte du four est ouverte et les aliments sont insérés dans la cavité de cuisson et enfermés par la porte du four. Le four maintient la cavité de cuisson à la température visée pendant un temps prédéterminé de telle sorte que les aliments puissent être cuits de manière précise et prévisible.

Un problème associé aux fours est que, lorsque la porte du four est ouverte, de l'énergie thermique est perdue par dissipation vers l'extérieur du four à travers l'ouverture de la cavité de cuisson. Ainsi, le four doit effectuer un travail plus important pour ramener la cavité de cuisson à la température visée et, par conséquent, le temps de cuisson des aliments est prolongé. Lorsque les aliments à cuire sont d'une taille bien inférieure, en section transversale, à l'ouverture de la cavité de cuisson, la perte d'énergie thermique lors de l'ouverture de la porte du four est inutile, inefficace et source de gaspillage.

Un objet de la présente invention est de proposer un mini-four plus économe en énergie avec des temps de cuisson réduits.

La présente invention est définie par la revendication 1.

Le fait de limiter l'accès à la cavité de cuisson par l'ouverture est avantageux en ce que l'exposition de la cavité de cuisson à l'extérieur du mini-four par l'ouverture lorsque la porte du mini-four se trouve dans la première position, ouverte, s'en trouve réduite. Ainsi, une perte d'énergie thermique inutile de la cavité de cuisson vers l'extérieur du mini-four est réduite lorsque la porte du four est ouverte mais il est tout de même encore possible de transférer certains aliments de petite taille entre la cavité de cuisson et l'extérieur du mini-four. La réduction de la perte d'énergie thermique depuis la cavité de cuisson lors du transfert d'un ou plusieurs aliments entre l'extérieur du four et la cavité de cuisson permet de maintenir ou de rétablir rapidement la température de cuisson souhaitée de la cavité de cuisson, d'où une réduction des temps de cuisson. L'élément couvrant aide également à réduire encore la perte d'énergie thermique depuis la cavité de cuisson vers l'extérieur du mini-four lorsqu'il est positionné entre la cavité de cuisson et la porte dans la seconde position, fermée, de telle sorte que la cavité de cuisson du mini-four puisse atteindre une température souhaitée plus rapidement et efficacement qu'en l'absence de l'élément couvrant.

Un ou plusieurs moyens de raccordement peuvent être positionnés à des fins de raccordement de l'élément couvrant au mini-four de telle sorte que, lors du raccordement au mini-four, l'élément couvrant s'étende en travers d'une région supérieure de l'ouverture. Un ou plusieurs moyens de raccordement peuvent être positionnés à des fins de raccordement de l'élément couvrant à une partie supérieure du mini-four.

Au moins un moyen de raccordement peut comprendre une partie de l'élément couvrant façonnée de façon à coopérer avec une partie de forme complémentaire du mini-four. Au moins un moyen de raccordement peut comprendre un bord de l'élément couvrant façonné de façon à coopérer avec une gorge, une fente ou une rainure du mini-four.

Au moins un moyen de raccordement peut comprendre un orifice en forme de trou de serrure destiné à recevoir une saillie de forme complémentaire s'étendant à partir du mini-four. L'orifice peut être positionné sur l'élément couvrant de façon à permettre à une partie du mini-four de s'étendre à travers l'orifice lorsque l'élément couvrant est raccordé au mini-four et la porte se trouve dans la seconde position.

L'élément couvrant peut en outre être dimensionné et façonné de telle sorte que, lorsque l'élément couvrant est raccordé au mini-four, il permette le transfert d'au moins une partie d'une grille ou d'une lèchefrite entre la cavité de cuisson et l'extérieur du four par l'ouverture.

Au moins une partie de l'élément couvrant peut comprendre une plaque de matériau. La plaque de matériau peut être suffisamment fine pour se loger entre la porte et la cavité de cuisson lorsque la porte se trouve dans la seconde position.

L'élément couvrant peut en outre comprendre une poignée permettant de saisir et de manipuler l'élément couvrant. Au moins une partie de la poignée peut être positionnée de telle sorte que, lorsque l'élément couvrant est raccordé au mini-four et disposé entre la cavité de cuisson et la porte, lorsque la porte se trouve dans la seconde position, au moins une partie de la poignée se trouve à l'extérieur du mini-four.

Les dimensions ou la forme de l'élément couvrant peuvent être ajustables.

Un deuxième aspect de la présente invention porte sur un mini-four comprenant une cavité de cuisson accessible depuis l'extérieur du four par une ouverture, une porte qui peut être déplacée entre une première position, dans laquelle il est possible d'accéder à la cavité de cuisson depuis l'extérieur du four par l'ouverture, et une seconde position, dans laquelle la porte restreint l'accès à la cavité de cuisson depuis l'extérieur du four par l'ouverture, et un ou plusieurs moyens de raccordement destinés à interagir avec des moyens de raccordement complémentaires d'un élément couvrant selon le premier aspect de la présente invention.

Au moins un moyen de raccordement du mini-four peut comprendre une saillie s'étendant depuis une partie du mini-four et destinée à recevoir un orifice en forme de trou de serrure complémentaire de la saillie et situé sur l'élément couvrant.

Au moins un moyen de raccordement du mini-four peut comprendre une rainure, une fente ou une gorge destinée à recevoir un bord complémentaire de l'élément couvrant.

Au moins un moyen de raccordement du mini-four peut être amovible.

Un troisième aspect de la présente invention porte sur un ensemble formant mini-four comprenant un mini-four selon le deuxième aspect de la présente invention, et un élément couvrant selon le premier aspect de la présente invention.

Un ou plusieurs moyens de raccordement de l'élément couvrant et un ou plusieurs moyens de raccordement complémentaires du mini-four peuvent être positionnés de telle sorte que l'élément couvrant s'étende en travers d'une région supérieure de l'ouverture du mini-four.

Un ou plusieurs moyens de raccordement de l'élément couvrant et un ou plusieurs moyens de raccordement complémentaires du mini-four peuvent être positionnés de telle sorte que l'élément couvrant soit raccordé à une partie supérieure du mini-four.

Au moins un moyen de raccordement peut comprendre un orifice en forme de trou de serrure destiné à recevoir une saillie de forme complémentaire s'étendant à partir du mini-four.

L'orifice peut être positionné sur l'élément couvrant de telle sorte qu'une partie du mini-four s'étende à travers l'orifice lorsque l'élément couvrant est raccordé au mini-four et la porte se trouve dans la seconde position.

Au moins un moyen de raccordement de l'élément couvrant peut comprendre un bord de l'élément couvrant et au moins un moyen de raccordement du mini-four peut comprendre une rainure ou gorge complémentaire dans laquelle est reçu le bord de l'élément couvrant.

L'élément couvrant peut en outre être dimensionné et façonné de telle sorte qu'il permette le transfert d'au moins une partie d'une grille ou d'une lèchefrite entre la cavité de cuisson et l'extérieur du four par l'ouverture lorsque l'élément couvrant est raccordé au mini-four.

Au moins une partie de l'élément couvrant peut comprendre une plaque de matériau qui est suffisamment fine pour se loger entre la porte et la cavité de cuisson lorsque la porte se trouve dans la seconde position.

Au moins une partie de la poignée de l'élément couvrant peut être positionnée à l'extérieur du mini-four lorsque l'élément couvrant est raccordé au mini-four et disposé entre la cavité de cuisson et la porte se trouve dans la seconde position.

Des modes de réalisation de la présente invention vont être expliqués plus en détail ci-dessous à titre d'exemple et en se référant aux dessins joints, dans lesquels :
- la figure 1: est une vue de face d'un ensemble formant mini-four comprenant un mini-four et un élément couvrant selon un aspect de la présente invention raccordé au mini-four, lorsque la porte du mini-four se trouve dans une position ouverte ;
- la figure 2: est une vue en perspective de l'ensemble formant mini-four illustré sur la figure 1 lorsque la porte du mini-four se trouve dans une position fermée ;
- la figure 3: est une vue en perspective de l'élément couvrant illustré sur la figure 1 ;
- la figure 4: est une vue de face de l'élément couvrant illustré sur la figure 1 ;
- la figure 5: est une vue en perspective du mini-four illustré sur la figure 1 sans porte ;
- la figure 6: est une vue en perspective du mini-four sans porte illustré sur la figure 5 et de l'élément couvrant illustré sur la figure 1 raccordé au mini-four sans porte ;
- la figure 7: est une vue de dessus du mini-four illustré sur la figure 1 ;
- la figure 8: est une vue en perspective de profil de l'ensemble formant mini-four illustré sur la figure 1 ;
- la figure 9: est une vue de face agrandie d'un orifice en forme de trou de serrure de l'élément couvrant illustré sur la figure 3 ;
- la figure 10a: est une vue de face agrandie d'une saillie s'étendant à partir d'une partie supérieure du mini-four illustré sur la figure 5 ;
- la figure 10b: est une vue de profil de la saillie illustrée sur la figure 10a ;
- la figure 11a: est une vue de face de l'orifice en forme de trou de serrure illustré sur la figure 9 lorsque la saillie illustrée sur les figures 10a et 10b est positionnée dans une partie de l'orifice en forme de trou de serrure ;
- la figure 11b: est une vue de face de l'orifice en forme de trou de serrure et de la saillie illustrés sur la figure 11a lorsque la saillie est positionnée dans une partie différente de l'orifice en forme de trou de serrure;
- la figure 12a: est une vue en perspective d'une variante de l'ensemble formant mini-four comprenant un mini-four et un élément couvrant en cours de raccordement au mini-four, lorsque la porte du mini-four se trouve dans la position ouverte ;
- la figure 12b: est une vue en perspective de l'ensemble formant mini-four illustré sur la figure 12a lorsque l'élément couvrant est au moins partiellement raccordé au mini-four ;
- la figure 13a: est une vue en perspective d'une autre variante de l'ensemble formant mini-four comprenant un mini-four et un élément couvrant en train d'être raccordé au mini-four, lorsque la porte du mini-four se trouve dans la position ouverte ;
- la figure 13b: est une vue en perspective de l'ensemble formant mini-four illustré sur la figure 13a lorsque l'élément couvrant est au moins partiellement raccordé au mini-four ;
- la figure 14: est une vue de face d'une variante de mode de réalisation d'un élément couvrant selon un aspect de la présente invention ;
- la figure 15a: est une vue en perspective d'une variante de mode de réalisation de la présente invention dans un état partiellement ouvert ;
- la figure 15b: est une vue en perspective du mode de réalisation illustré sur la figure 15a dans un état fermé ;
- la figure 16a: est une vue en perspective d'une autre configuration de mode de réalisation de la présente invention dans un état fermé ;
- la figure 16b: est une vue en perspective du mode de réalisation illustré sur la figure 16a dans une configuration dans laquelle il est possible d'accéder à une cavité de cuisson du mini-four ; et
- la figure 16c: est une vue en perspective du mode de réalisation illustré sur la figure 16a dans une autre configuration dans laquelle il est possible d'accéder à la cavité de cuisson du mini-four.

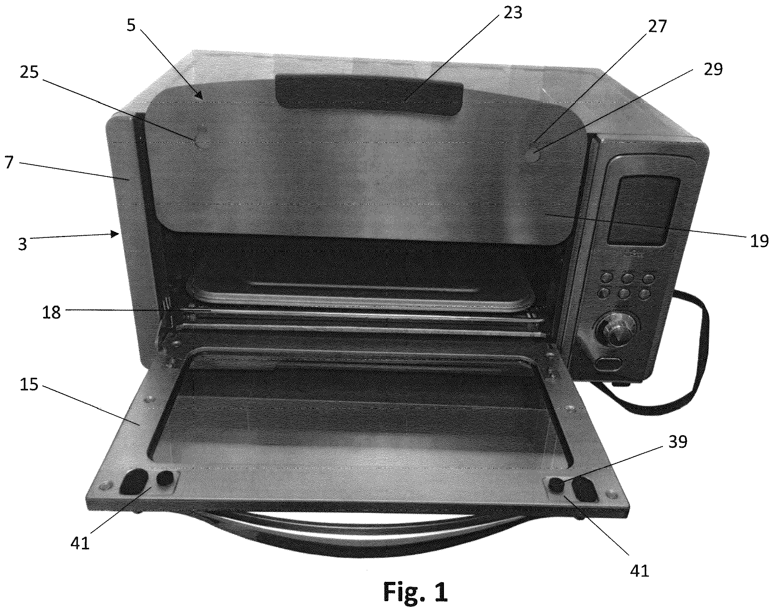

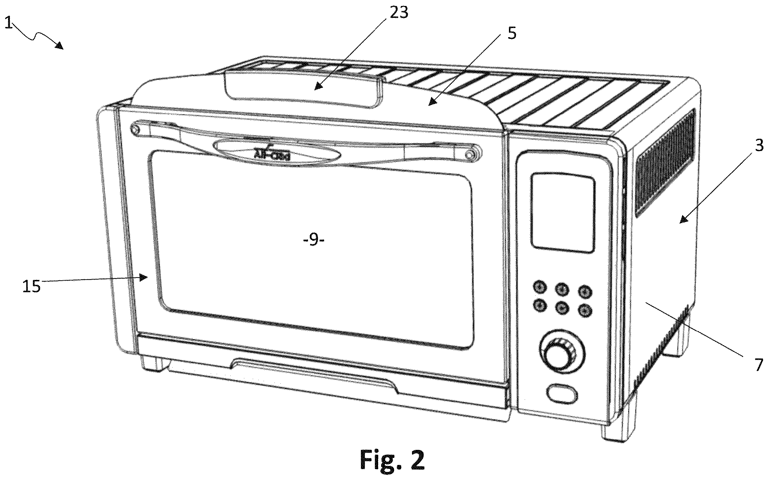

En se référant aux figures 1 et 2, un ensemble formant mini-four 1 est illustré, comprenant un mini-four 3 et un élément couvrant 5 sous la forme d'un accessoire qui est raccordé au mini-four 3. Le mini-four 3 comprend un châssis 7 qui définit une cavité de cuisson 9 comportant une ouverture 11 essentiellement rectangulaire définie par un bord permettant d'accéder à la cavité de cuisson 9. Le mini-four 3 comprend en outre une porte 15 qui est fixée de manière articulée au châssis 7 du mini-four et qui peut être déplacée entre une première position, dans laquelle la porte du mini-four se trouve dans un état ouvert de façon à ce qu'il soit possible d'accéder à la cavité de cuisson 9 de telle sorte qu'un utilisateur puisse transférer des aliments entre la cavité de cuisson 9 et l'extérieur du mini-four (comme illustré sur la figure 1), et une seconde position, dans laquelle la porte 15 du mini-four se trouve dans un état fermé ou essentiellement fermé et s'étend en travers de l'ouverture 11 (comme illustré sur la figure 2) de telle sorte qu'il ne soit pas possible de transférer aisément des aliments entre la cavité de cuisson 9 et l'extérieur du four.

La cavité de cuisson 9 comprend au moins un élément chauffant électrique 16 servant à élever la température de la cavité de cuisson 9 afin de cuire les aliments à l'intérieur de la cavité de cuisson 9 lorsque le mini-four 3 est mis en fonctionnement. Comme illustré sur les figures 1, 5 et 6, la cavité de cuisson 9 comprend de multiples paires de rainures 17, les deux rainures de chaque paire étant respectivement formées dans les parois intérieures de côtés opposés de la cavité de cuisson 9 et disposées de telle sorte qu'elles s'étendent parallèlement le long des parois intérieures. Les rainures 17 sont configurées pour recevoir des bords respectifs d'une grille 18 afin de supporter et de maintenir la grille 18 le long d'un plan qui est essentiellement parallèle à une surface sur laquelle le mini-four 3 peut être supporté et afin de permettre à la grille 18 de glisser dans et hors de la cavité de cuisson 9. De multiples paires de rainures 17 sont disposées à diverses hauteurs le long des parois latérales intérieures de sorte qu'il soit possible de placer une ou plusieurs grilles 18 à diverses hauteurs à l'intérieur de la cavité de cuisson 9 de manière à ce que des aliments puissent être supportés sur la ou chaque grille 18 au niveau de diverses régions de la cavité de cuisson 9 en fonction du type d'aliment et du type de cuisson, par ex. cuisson au four générale, grill ou rôtissage.

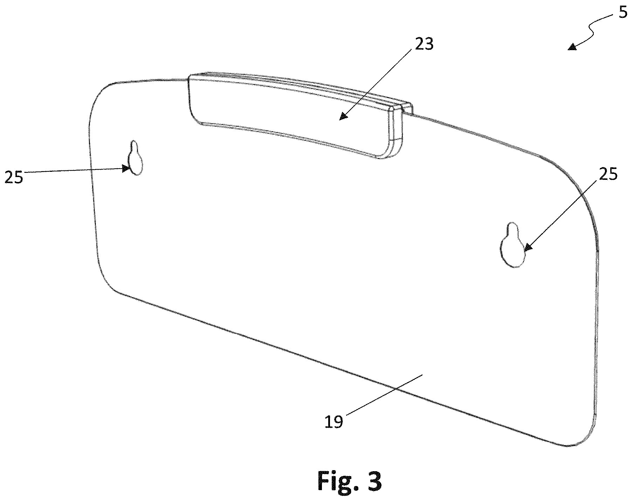

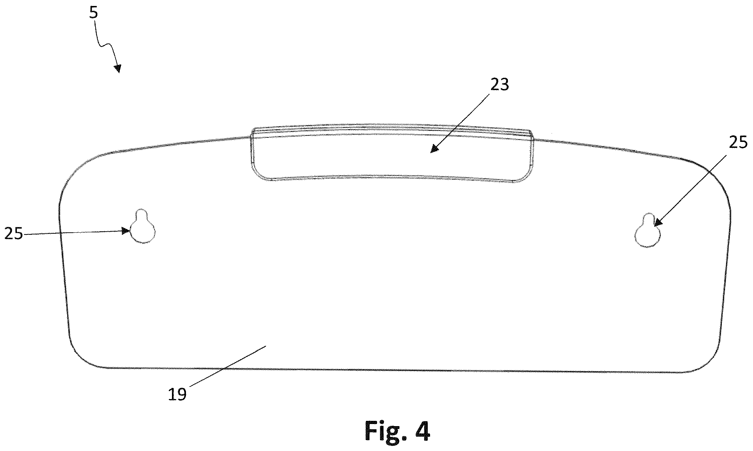

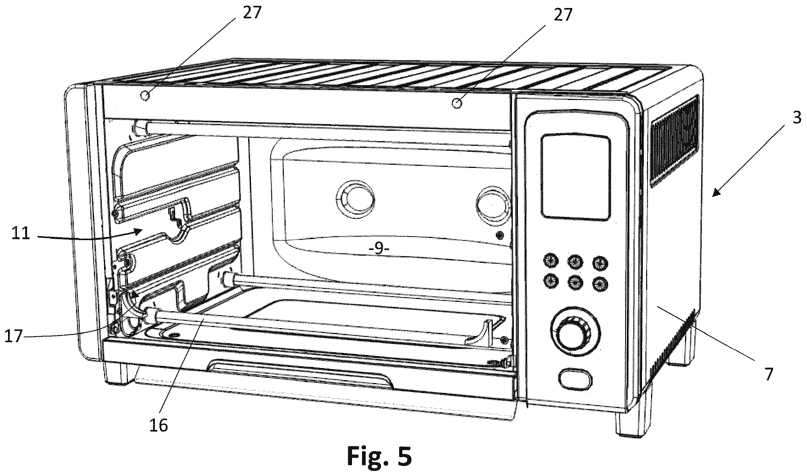

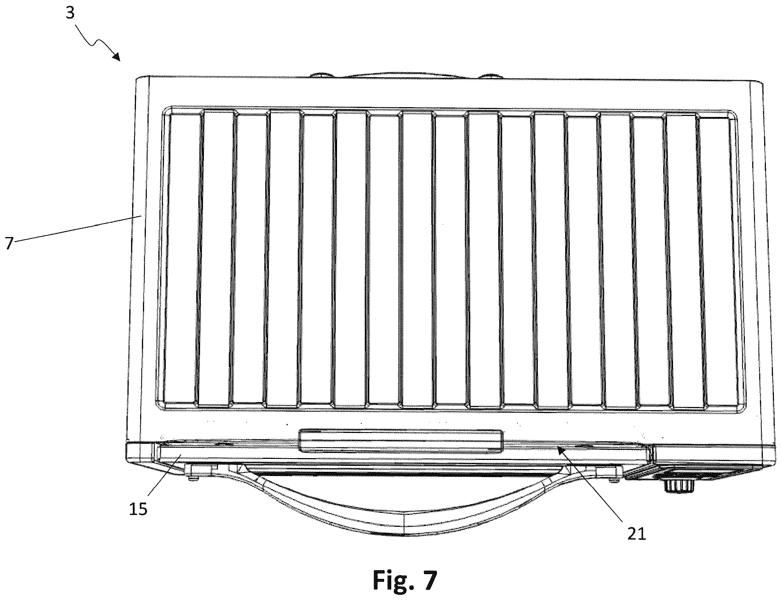

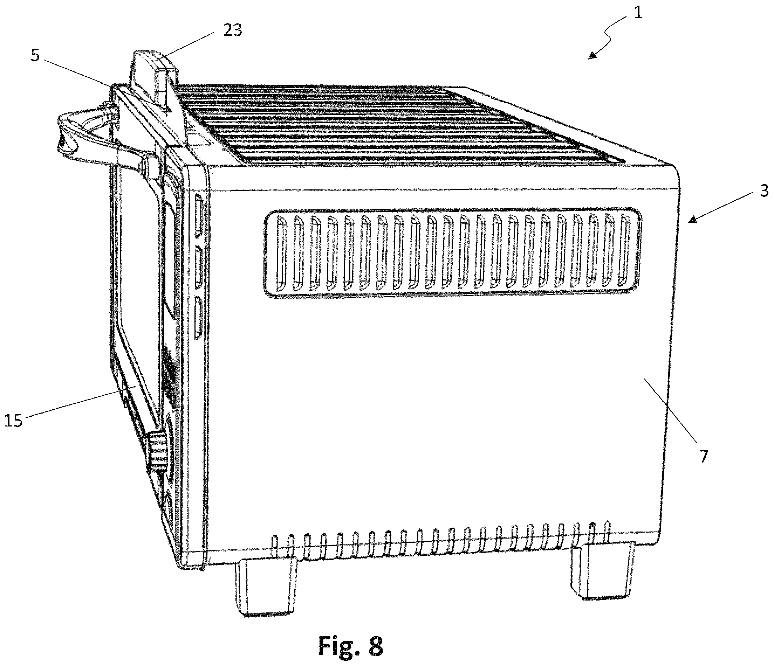

En se référant en particulier aux figures 3 et 4, l'élément couvrant 5 comprend un corps 19 de forme essentiellement rectangulaire, se présentant sous la forme d'une plaque de métal comportant une surface réfléchissante destinée à réfléchir le rayonnement thermique de façon à le renvoyer dans la cavité de cuisson 9 lorsqu'il est en place. Le corps 19 peut être formé à partir de tout matériau adapté tel que l'acier inoxydable, l'acier à forte teneur en carbone ou l'aluminium, il peut comprendre également une isolation thermique, et est dimensionné et façonné pour recouvrir une partie de l'ouverture 11 lorsqu'il est raccordé de manière appropriée au mini-four 3 comme illustré sur la figure 5. Le corps 19 est dimensionné de telle sorte qu'au moins une partie du corps 19 puisse se loger entre la cavité de cuisson 9 et la porte 15 du mini-four lorsque la porte 15 du mini-four se trouve dans l'état fermé comme illustré, par exemple, sur la figure 8. En d'autres termes, au moins une partie du corps 19 est suffisamment fine pour se loger entre la cavité de cuisson 9 et la porte 15 lorsqu'elle se trouve dans un état fermé sans affecter la capacité de la porte 15 du four à se fermer. Pour faciliter ceci, comme illustré sur la figure 7, un petit espace 21 est formé entre le bord avant supérieur du châssis 7 et la porte 15 du four lorsqu'elle se trouve dans la position fermée. L'espace 21 permet à l'élément couvrant 5 de s'étendre depuis l'extérieur du mini-four 3 et entre la porte 15 et le châssis 7. L'espace 21 peut être inhérent à un mini-four 3 existant ou peut être spécifiquement ménagé dans un mini-four 3 afin qu'il y ait suffisamment d'espace pour l'élément couvrant 5.

L'élément couvrant 5 comprend en outre une poignée 23 constituée au moins partiellement d'un matériau d'isolation thermique et fixée à un bord supérieur du corps 19 de façon à permettre une manipulation sans danger de l'élément couvrant 5 potentiellement chaud lors de l'utilisation. La poignée 23 est positionnée sur l'élément couvrant 5 de façon à être située à l'extérieur du mini-four 3 lorsque l'élément couvrant 5 est raccordé au mini-four 3 de telle sorte qu'elle ne soit pas directement exposée à l'énergie thermique provenant de la cavité de cuisson 9, lorsque le mini-four 3 est en cours d'utilisation. La poignée 23 peut être dotée d'une forme ergonomique permettant à l'utilisateur de la saisir lorsqu'elle est raccordée au mini-four 3 de sorte qu'il soit facile de retirer l'élément couvrant 5 du mini-four 3 et de fixer l'élément couvrant 5 à celui-ci.

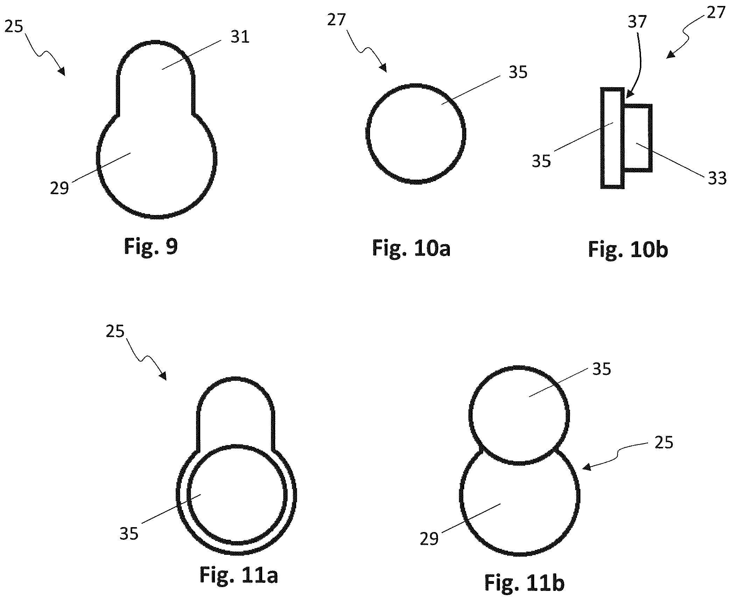

Afin de faciliter la fixation de l'élément couvrant 5 au mini-four 3, l'élément couvrant 5 comprend en outre une paire de moyens de raccordement 25 se présentant sous la forme d'orifices 25 en forme de trou de serrure qui sont formés à travers le corps 19. En se référant à la figure 9, les orifices 25 en forme de trou de serrure comprennent chacun une première section 29 de plus grand diamètre et une seconde section 31 de plus petit diamètre positionnée au-dessus de la première section 29 lorsque l'élément couvrant 5 se trouve dans une orientation normale d'utilisation. Les deux orifices 25 sont respectivement formés sur des côtés opposés de l'élément couvrant 5 et placés de façon à coopérer avec une paire de moyens de raccordement complémentaires se présentant sous la forme de saillies 27 s'étendant à partir de la face avant supérieure du mini-four 3. Les saillies 27 s'étendent à partir de la face avant du mini-four 3 sur une distance suffisante pour une mise en prise avec les orifices 25 de l'élément couvrant 5 mais sans faire obstacle à la fermeture de la porte 15 du four.

En se référant aux figures 10a et 10b, les saillies 27 comprennent chacune un corps de saillie 33 cylindrique présentant une longueur supérieure à l'épaisseur du corps 19 de l'élément couvrant 5. Une tête de saillie 35 circulaire est formée au niveau de l'extrémité terminale de chaque corps de saillie 33 et présente un diamètre supérieur à celui du corps de saillie 33 cylindrique. La tête de saillie 35 forme une lèvre 37 au niveau de l'interface entre la tête de saillie 35 et le corps de saillie 33. En se référant aux figures 11a et 11b, la tête de saillie 35 présente un diamètre inférieur à celui de la première section 29 de plus grand diamètre de l'orifice 25 en forme de trou de serrure de façon à permettre à la saillie 27 d'être insérée à travers cette section de l'orifice 25. À l'inverse, la tête de saillie 35 présente un diamètre supérieur à la largeur ou au diamètre de la seconde section 31 de plus petit diamètre de l'orifice 25 en forme de trou de serrure de telle sorte que, lorsque la saillie 27 est insérée à travers l'orifice 25 et l'élément couvrant 5 est manipulé afin de positionner la saillie 27 à l'intérieur de la seconde section 31 de plus petit diamètre de l'orifice 25, l'élément couvrant 5 soit retenu par les saillies 27 du fait de la mise en prise des lèvres 37 des saillies 27 avec le corps 19 de l'élément couvrant 5, comme illustré sur la figure 11b.

Ainsi que le concevra l'homme de l'art, d'autres moyens de raccordement appropriés pour la fixation de l'élément couvrant 5 au mini-four peuvent être utilisés. Par exemple, les moyens de raccordement peuvent comprendre un ou plusieurs aimants configurés pour attirer l'élément couvrant 5 vers le mini-four 3 soit en raison des propriétés magnétiques du matériau du mini-four 3, soit au moyen d'un aimant positionné de manière correspondante sur le mini-four 3. En variante, les moyens de raccordement peuvent comprendre une vis configurée pour s'étendre à travers un orifice formé dans l'élément couvrant 5 et dans un trou de vis formé dans le châssis 7 du mini-four 3. Dans une autre variante, le mini-four 3 peut comprendre une paire de rainures ou fentes orientées verticalement, disposées sur des côtés opposés de l'ouverture 11, chaque rainure ou fente étant destinée à recevoir un bord de l'élément couvrant 5 de façon à permettre à l'élément couvrant 5 de glisser dans les rainures et d'être assujetti en place en travers d'une partie de l'ouverture 11. Dans cette autre variante, le mini-four 3 peut comprendre en outre une ou plusieurs butées afin d'empêcher l'élément couvrant 5 de glisser trop loin en travers de l'ouverture 11.

En se référant à la figure 1, une paire d'éléments d'amortissement 39 en caoutchouc en forme de disques sont fixés à l'intérieur de la porte 15 du four et positionnés de telle sorte que, lorsque la porte 15 du four se trouve dans une position fermée et l'élément couvrant 5 est raccordé au mini-four 3 par le biais des saillies 27, les éléments d'amortissement 39 en caoutchouc soient placés au sein des limites des premières sections 29 de plus grand diamètre des orifices 25 correspondants et en contact avec le châssis 7 du mini-four 3 à travers l'élément couvrant 5. Dans le mode de réalisation décrit, les dimensions des éléments d'amortissement 39 en caoutchouc sont choisies de telle sorte que, lorsque la porte 15 se trouve dans la position fermée et les éléments d'amortissement 39 en caoutchouc sont en contact avec le châssis 7 à travers l'élément couvrant 5, les éléments d'amortissement 39 en caoutchouc maintiennent la porte 15 du four dans une position qui est espacée du châssis 7 d'une distance suffisante pour créer un espace 21 requis pour l'insertion de l'élément couvrant 5 entre la porte 15 du four et le châssis 7. Les éléments d'amortissement 39 en caoutchouc peuvent être dimensionnés en outre afin d'empêcher la porte 15 du four de venir en contact avec les têtes de saillies 35 lorsque la porte 15 du four se trouve dans la position fermée de façon à empêcher un endommagement de la porte 15 provoqué par les saillies 27. De plus ou en variante, une paire d'évidements 41 peuvent être formés dans la surface intérieure de la porte 15 du four au niveau des emplacements adjacents aux saillies 27 lorsque la porte 15 du four se trouve dans la position fermée afin d'accueillir au moins une partie des têtes de saillies 35 et de garantir que les saillies 27 n'endommagent pas la porte 15 du four et n'empêchent pas la porte 15 du four de se fermer correctement.

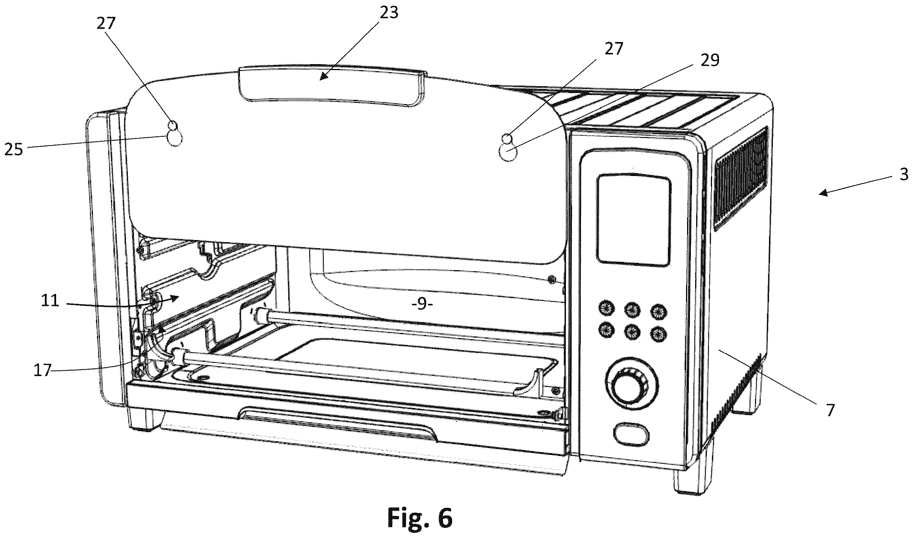

La forme et les dimensions du corps 19 de l'élément couvrant 5 sont choisies de telle sorte que, lorsque l'élément couvrant 5 est raccordé au mini-four 3 par la mise en prise des orifices 25 en forme de trou de serrure avec les saillies 27, l'élément couvrant 5 s'étende vers le bas à partir de la partie supérieure du mini-four 3 et partiellement en travers de l'ouverture 11 débouchant sur la cavité de cuisson 9. En se référant à la figure 6, les dimensions de l'élément couvrant 5 sont telles que, lorsqu'il est en place et raccordé au mini-four 3, l'élément couvrant 5 bloque une partie supérieure de l'ouverture 11 mais laisse une partie inférieure de l'ouverture 11 dégagée de telle sorte que des aliments puissent être transférés entre la cavité de cuisson 9 et l'extérieur du mini-four 3 lorsque la porte 15 du mini-four se trouve dans une position ouverte. Comme illustré le plus clairement sur la figure 1, la forme et les dimensions du corps 19 de l'élément couvrant 5 sont en outre choisies de telle sorte que, lorsqu'il est en place et raccordé au mini-four 3, une grille 18 installée sur une paire de rainures 17 ne soit pas couverte par l'élément couvrant 5, de telle sorte que la grille puisse être transférée entre la cavité de cuisson 9 et l'extérieur du mini-four sans obstruction causée par l'élément couvrant 5. Par conséquent, des aliments peuvent être disposés sur une grille et insérés dans la cavité de cuisson 9 afin d'être supportés par une paire de rainures 17 même lorsque l'élément couvrant 5 est en place et s'étend partiellement en travers de la partie supérieure de l'ouverture 11.

En cours d'utilisation, la porte 15 du mini-four est déplacée jusqu'à une position ouverte et l'élément couvrant 5 est raccordé au mini-four 3 par la mise en prise des orifices 25 en forme de trous de serrure avec les saillies 27 par le biais d'une disposition et d'une manipulation appropriées des sections 29, 31 des orifices 25 par rapport aux saillies 27 comme décrit ci-dessus. Lorsque l'élément couvrant 5 est raccordé au mini-four 3, la porte 15 du mini-four est fermée et le mini-four 3 est mis en fonctionnement afin d'élever la température de la cavité de cuisson 9 jusqu'à une température de cuisson souhaitée. Une fois la température de cuisson visée atteinte, la porte 15 du four est ouverte et les aliments sont transférés soit directement sur une grille 18 à l'intérieur de la cavité de cuisson 9 se trouvant au niveau d'une région dégagée de la cavité de cuisson 9, soit en insérant une grille 18 supportant les aliments dans les rainures 17 situées dans une région dégagée de la cavité de cuisson 9. Du fait de la présence de l'élément couvrant s'étendant partiellement en travers de l'ouverture 11 au niveau d'une partie supérieure de l'ouverture 11, la perte d'énergie thermique depuis la cavité de cuisson 9 par rayonnement et/ou convection, lorsque la porte 15 du four est ouverte, est réduite. Par conséquent, la température de la cavité de cuisson 9 est soit maintenue, soit légèrement abaissée seulement malgré l'ouverture de la porte 15 du four pour le transfert d'aliments. Ainsi, le temps de cuisson est réduit et le rendement énergétique du mini-four 3 est augmenté.

Une fois les aliments cuits, l'élément couvrant 5 peut être retiré sans danger en séparant les orifices 25 des saillies 27 et en transportant l'élément couvrant 5 par la poignée 23 jusqu'à un emplacement sûr et/ou à des fins de nettoyage.

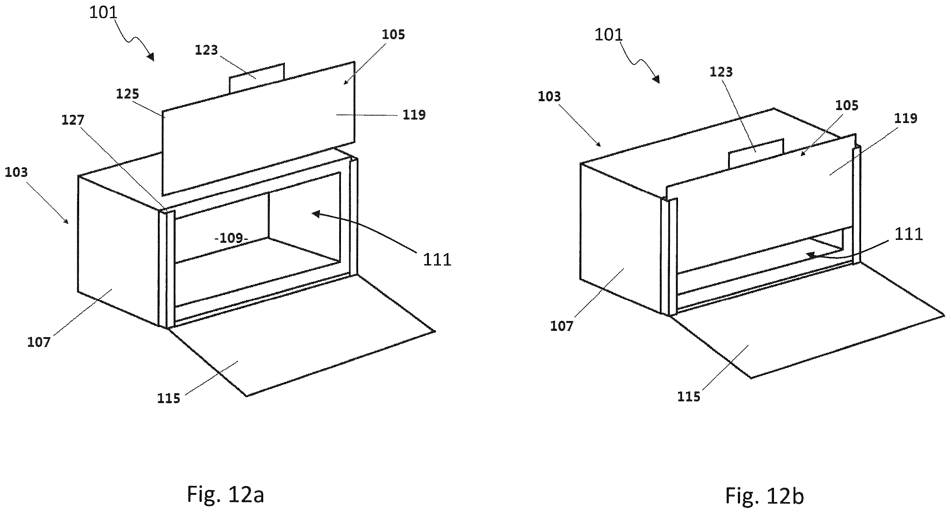

En se référant aux figures 12a et 12b, dans une variante de mode de réalisation, l'ensemble formant mini-four 101 comprend un élément couvrant 105 comportant un corps 119 formé à partir d'une plaque de matériau et façonné de façon à couvrir au moins partiellement l'ouverture 111 du mini-four 103 lorsqu'il est disposé entre la cavité de cuisson 109 et l'extérieur du four lorsque la porte 115 se trouve dans une position ouverte. Dans cet autre mode de réalisation, les moyens de raccordement de l'élément couvrant 105 comprennent les bords latéraux 125 de l'élément couvrant 105 qui sont façonnés pour être reçus par une paire de rainures ou gorges 127 de forme complémentaire, respectivement formées sur des côtés opposés du châssis 107 du mini-four, de chaque côté de l'ouverture 111. En cours d'utilisation, l'élément couvrant 105 est mis en place en le faisant glisser le long des gorges 127 depuis la partie supérieure du mini-four 103. L'élément couvrant 105 peut être dimensionné et façonné de façon à recouvrir l'ouverture 111 entière ou seulement une partie de l'ouverture 111 lorsqu'il est positionné le long des gorges 127. Le mini-four 103 peut également comprendre une ou plusieurs butées destinées à empêcher l'élément couvrant 105 de glisser trop bas le long des gorges 127. Ce second mode de réalisation présente l'avantage de permettre à un utilisateur de faire glisser l'élément couvrant 105 par le biais de la poignée 123 jusqu'à diverses positions le long des gorges 127 afin d'augmenter ou de diminuer l'accès à l'ouverture et, par conséquent, de permettre le transfert de petits ou gros aliments entre la cavité de cuisson 109 et l'extérieur du four, et également de réguler la quantité d'énergie thermique qui peut être perdue depuis la cavité de cuisson 109.

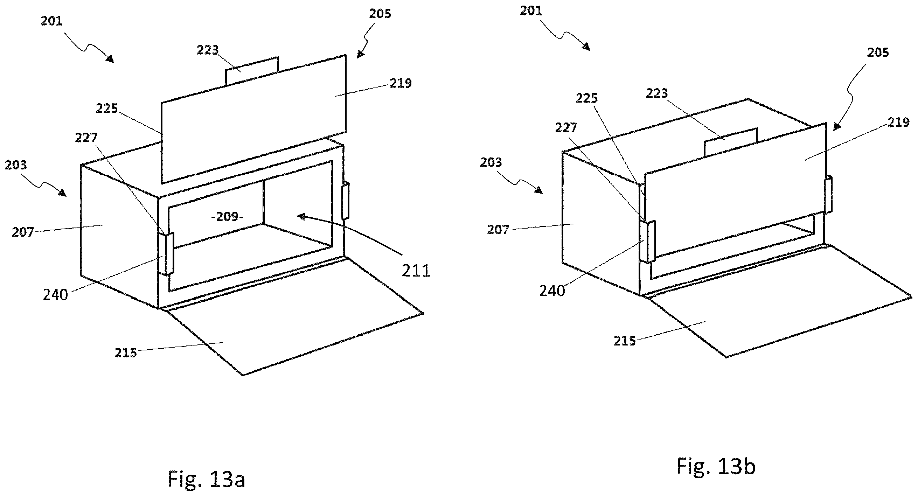

En se référant aux figures 13a et 13b, dans une autre variante de mode de réalisation, les moyens de raccordement 227 du mini-four 203 sont réalisés sous la forme d'une rainure ou gorge 227 d'un adaptateur 240 qui peut être fixé à une partie du châssis 207 du mini-four 203 de façon à permettre le raccordement d'un élément couvrant 205 au mini-four 203 lorsque la porte 215 se trouve dans une position ouverte. Ainsi que le concevra aisément l'homme de l'art, l'adaptateur 240 peut être fixé au châssis 207 du mini-four 203 par le biais de n'importe quel moyen de fixation adapté tel que des aimants, des vis, des crochets. Lorsqu'ils ne sont pas utilisés, les adaptateurs 240 peuvent être détachés et séparés du reste du mini-four 203 de façon à remettre ainsi le mini-four 203 dans son état fonctionnel normal. Ainsi, dans cette variante de mode de réalisation, les moyens de raccordement 227 du mini-four 203 intégrés dans les adaptateurs 240 sont amovibles.

Comme illustré sur la figure 13a, la paire d'adaptateurs 240 est respectivement fixés au châssis 207 sur des côtés opposés de l'ouverture 211 de la cavité de cuisson 209 pour recevoir des bords des côtés de l'élément couvrant 205 le long des gorges 227. Il est envisagé que les adaptateurs puissent, en variante, faire partie d'une grille ou étagère destinée à être utilisée avec un mini-four, les adaptateurs étant alors positionnés sur la grille de telle sorte que, lors de l'insertion de la grille dans la cavité de cuisson 209, les adaptateurs 240 soient positionnés à des fins d'interaction avec des moyens de raccordement 225 complémentaires, par exemple des bords 225, de l'élément couvrant 205 de façon à retenir l'élément couvrant 205 au moins partiellement en travers de l'ouverture 211.

L'homme de l'art concevra que les moyens de raccordement 227 de l'adaptateur 240 peuvent prendre n'importe quelle forme nécessaire pour interagir avec des moyens de raccordement 225 complémentaires de l'élément couvrant 205 de façon à permettre le raccordement de l'élément couvrant 205 au mini-four 203. Par exemple, si les moyens de raccordement 225 complémentaires de l'élément couvrant 205 comprennent un ou plusieurs orifices en forme de trous de serrure comme décrit ci-dessus, les moyens de raccordement 227 de l'adaptateur 240 peuvent comprendre une ou plusieurs saillies destinées à venir en prise avec l'élément couvrant 205.

L'utilisation d'un ou de plusieurs adaptateurs 240 est avantageuse en ce qu'elle permet de rendre compatible n'importe quel mini-four 203 à des fins de raccordement d'un élément couvrant 205 au mini-four 203, via un bord latéral ajustable de l'élément couvrant 205 faisant office de moyens de raccordement 225 complémentaires des moyens de raccordement 227. Ainsi, le châssis 207 du mini-four ne doit pas nécessairement être spécifiquement conçu à des fins de raccordement d'un élément couvrant 205.

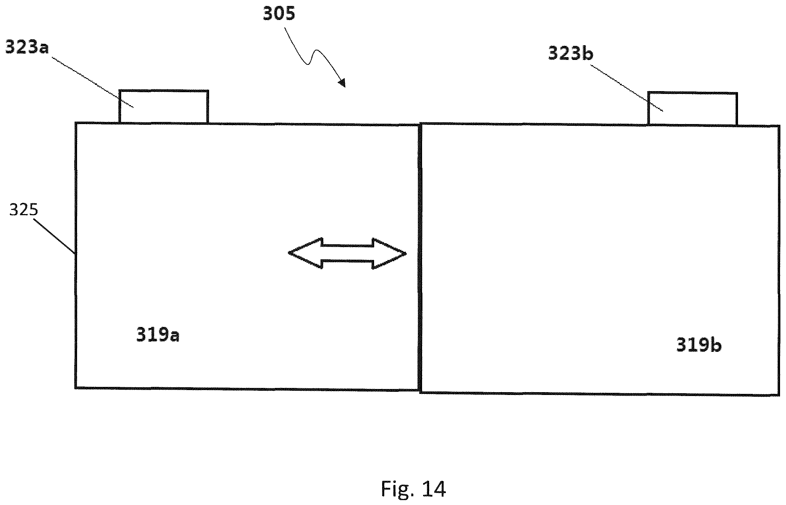

En se référant à la figure 14, il est envisagé que l'élément couvrant 305 puisse être construit de façon à permettre une modification des dimensions ou de la forme de l'élément couvrant 305 en fonction du type de mini-four auquel l'élément couvrant 305 est destiné à être raccordé. Dans le mode de réalisation représenté, l'élément couvrant 305 comprend deux parties de corps 319a, 319b qui sont en prise à coulissement de façon à permettre une modification de la largeur de l'élément couvrant 305. Dans ce mode de réalisation, chaque partie 319a, 319b peut comprendre une poignée 323a, 323b correspondante de façon à permettre une manipulation sans danger de l'élément couvrant 305 après exposition à de l'énergie thermique. Les dimensions et/ou la forme d'un tel élément couvrant 305 peuvent, de manière avantageuse, être adaptées en fonction des dimensions et/ou de la forme de l'ouverture de la cavité de cuisson d'un mini-four de telle sorte que l'élément couvrant 305 puisse être utilisé avec des mini-fours de diverses dimensions.

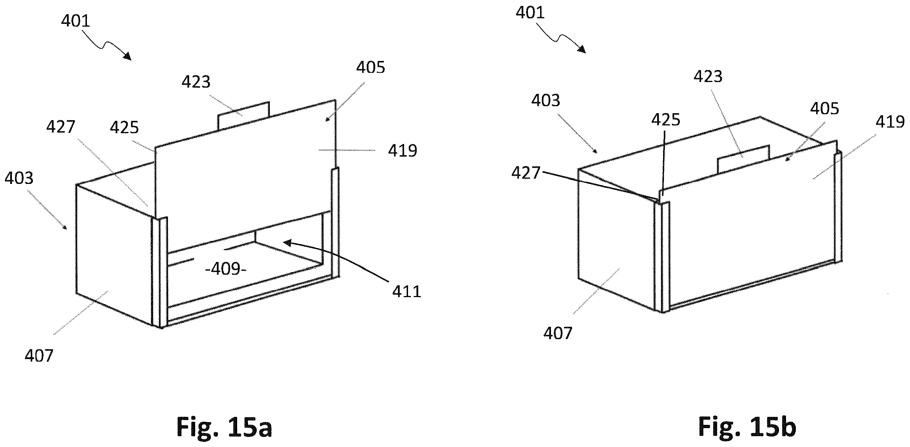

En se référant aux figures 15a et 15b, il est envisagé que l'élément couvrant 405 puisse remplir la fonction d'une porte de mini-four sans qu'une porte supplémentaire soit nécessaire pour fermer complètement le mini-four lorsque l'élément couvrant est en place. Dans le mode de réalisation représenté, le mini-four 403 comprend une paire de gorges formées de chaque côté de la cavité de cuisson 409 du mini-four et façonnées et configurées pour recevoir des bords de l'élément couvrant 405, faisant office de moyens de raccordement 425 complémentaires de moyens de raccordement 427 du mini-four 403.-. Ainsi, l'élément couvrant 405 est en mesure de coulisser le long de gorges 427 dans une direction essentiellement parallèle au plan de l'ouverture 411 jusqu'à un certain nombre de positions différentes entre un état complètement ouvert et un état complètement fermé. Par conséquent, l'élément couvrant 405 peut coulisser jusqu'à une position dans laquelle il est possible d'accéder à la cavité de cuisson 409 sans toutefois exposer totalement la cavité de cuisson 409 à l'extérieur du mini-four et provoquer une perte de chaleur inutile. Ceci peut être particulièrement avantageux lorsqu'un aliment est suffisamment petit pour ne pas nécessiter une exposition de la totalité de l'ouverture 411 menant à la cavité de cuisson 409 pour le transfert de l'aliment entre la cavité de cuisson 409 et l'extérieur du mini-four. Les gorges 427 et/ou l'élément couvrant 405 peuvent comprendre des attributs coopérant mutuellement qui peuvent venir en prise les uns avec les autres à divers intervalles le long des gorges 427 de façon à retenir l'élément couvrant 405 dans un état partiellement ouvert particulier. Ceci évite qu'un utilisateur ait à maintenir continuellement l'élément couvrant 405 dans un état partiellement ouvert souhaité et, par conséquent, permet à un utilisateur de l'ensemble formant mini-four 401 d'avoir ses deux mains libres pour le transfert des aliments.

Le fait de configurer l'élément couvrant 405 de sorte qu'il coulisse dans une direction essentiellement parallèle au plan de l'ouverture 411 permet de transférer les aliments entre la cavité de cuisson 409 et l'extérieur du mini-four dans une direction essentiellement perpendiculaire au plan de l'ouverture 411. Par conséquent, des aliments peuvent être transférés entre, par exemple, une grille ou une lèchefrite disposée horizontalement à l'intérieur de la cavité de cuisson 409 sans devoir incliner ou pencher les aliments lors du transfert, de sorte que la probabilité de chute des aliments pendant le transfert est minimisée.

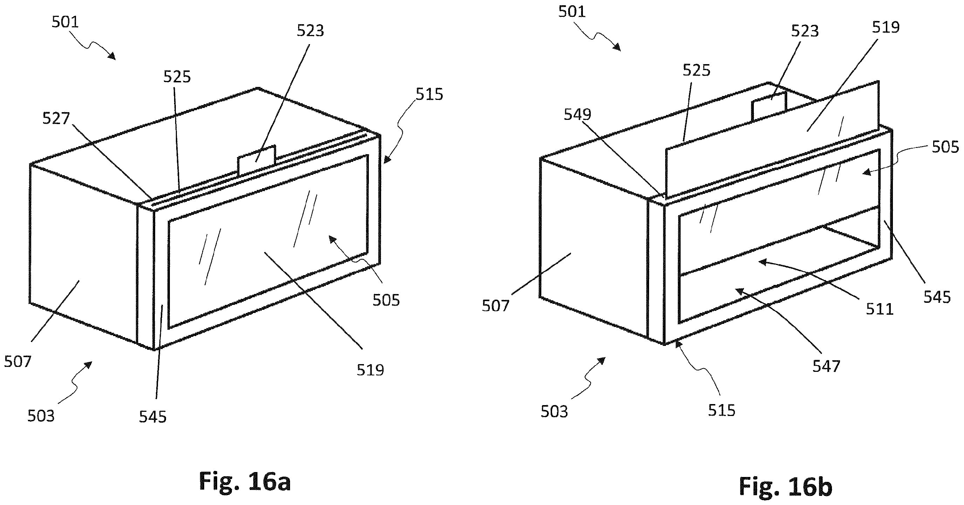

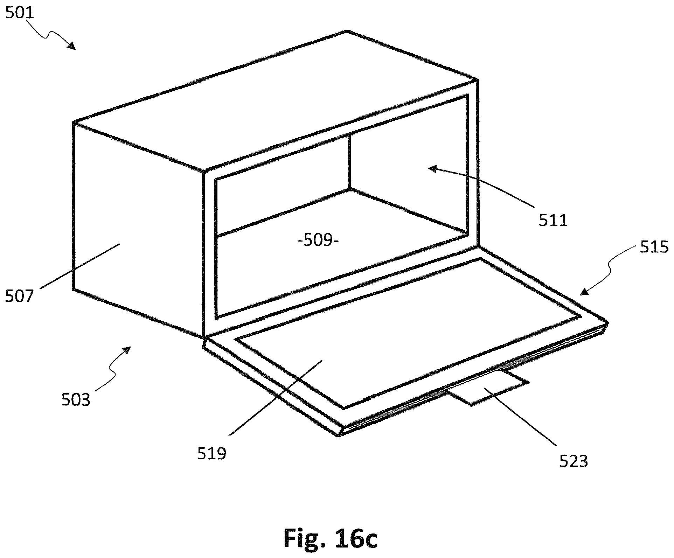

En se référant aux figures 16a, 16b et 16c, dans une autre variante de mode de réalisation, l'élément couvrant 505 peut être intégré à la porte 515 du mini-four.503 Dans le mode de réalisation représenté, la porte 515 du mini-four est fixée de manière articulée au châssis 507 du mini-four 503 de telle sorte qu'elle puisse être déplacée selon une succession de positions entre un état complètement fermé, dans lequel l'accès à la cavité de cuisson 509 est restreint, et un état complètement ouvert, dans lequel l'accès à la cavité de cuisson 509 par l'ouverture 511 n'est pas bloqué par la porte 515. La porte 515 du four comprend un cadre 545 qui définit un espace ou une ouverture 547 à l'intérieur duquel ou de laquelle peut habituellement être positionnée une fenêtre, et une fente 549 formée dans un côté supérieur du cadre à des fins de réception d'un élément couvrant 505 présentant un bord supérieur faisant office de moyens de raccordement 525 complémentaires de moyens de raccordement 527 du mini-four 503 de forme correspondante. La porte 515 du four peut en outre comprendre une paire de gorges (non illustrées) disposées de chaque côté de l'ouverture 547 de la porte du four pour recevoir des bords de forme correspondante de l'élément couvrant 505 à des fins de mise en prise et de guidage de l'élément couvrant 505 selon une configuration coulissante.

En se référant en particulier à la figure 16b, l'élément couvrant 505 est façonné et configuré pour être inséré dans l'ouverture 547 de la porte défini par le cadre 545 de la porte par le biais de la fente 549 et pour coulisser jusqu'à diverses positions par rapport au cadre 545 de la porte. Ainsi, lorsque la porte 515 se trouve dans une position fermée, comme illustré sur les figures 16a et 16b, dans laquelle l'ouverture 547 de la porte est bloqué, il est possible de faire coulisser l'élément couvrant 505 dans une direction allant vers le haut par le biais de la poignée 523 de façon à débloquer l'ouverture 547 de la porte et à permettre l'accès à la cavité de cuisson 509 par l'ouverture 511 du mini-four même lorsque la porte 515 du four est fermée. Par conséquent, l'élément couvrant 505 peut être déplacé jusqu'à une succession de positions différentes afin de varier la mesure dans laquelle il est possible d'accéder à la cavité de cuisson 509 selon ce que nécessite un aliment particulier sans exposer de manière excessive la cavité de cuisson 509 à l'extérieur du mini-four. L'élément couvrant 505 peut être au moins partiellement constitué de verre de telle sorte que, lorsqu'il est placé à l'intérieur de l'espace 547 de la porte selon une configuration de blocage, il soit tout de même possible de voir la cavité de cuisson 509 à travers l'élément couvrant 505 de telle sorte que la progression de la cuisson d'un aliment puisse être observée.

Si un accès total, sans blocage, à la cavité de cuisson 509 est requis, l'élément couvrant 505 peut être placé dans la position fermée illustrée sur la figure 16a, dans laquelle l'ouverture 547 est complètement bloquée par l'élément couvrant 505 et la totalité de la porte 515, y compris l'élément couvrant 505, peut être déplacée jusqu'à une position complètement ouverte comme illustré sur la figure 16c. Ceci peut être souhaitable lorsque la cavité de cuisson 509 nécessite un nettoyage ou lorsqu'un aliment particulièrement volumineux d'une taille supérieure à celle de l'ouverture 547 de la porte doit être transféré entre la cavité de cuisson 509 et l'extérieur du mini-four.

## Revendications

1. Ensemble formant mini-four (1, 101, 201, 401, 501) comprenant un mini-four (3, 103, 203, 403, 503) et un élément couvrant (5, 105, 205, 305, 405, 505), le mini-four (3, 103, 203, 403, 503) comprenant une cavité de cuisson (9, 109, 209 409, 509) accessible depuis l'extérieur du four par une ouverture (11, 111, 211, 411, 511), une porte (15, 115, 215, 405, 515) apte à être déplacée entre une première position, dans laquelle il est possible d'accéder à la cavité de cuisson (9, 109, 209, 409, 509) depuis l'extérieur du four par l'ouverture (11, 111, 211, 411, 511), et une seconde position, dans laquelle la porte (15, 115, 215, 405, 515) restreint l'accès à la cavité de cuisson (9, 109, 209, 409, 509) depuis l'extérieur du four par l'ouverture (11, 111, 211, 411, 511), et un ou plusieurs moyens de raccordement (27, 127, 227, 427, 527) destinés à interagir avec des moyens de raccordement (25, 125, 225, 325, 425, 525) complémentaires d'un élément couvrant (5, 105, 205, 305, 405, 505) destiné à être raccordé au mini-four (3, 103, 203, 403, 503), l'élément couvrant (5, 105, 205, 305, 405, 505) comprenant un ou plusieurs moyens de raccordement (25, 125, 225, 425, 525) servant à raccorder l'élément couvrant (5, 105, 205, 305, 405, 505) à un ou plusieurs moyens de raccordement (27, 127, 227, 427, 527) complémentaires du mini-four (3, 103, 203, 403, 503), et
- l'élément couvrant (405, 505) étant dimensionné et façonné pour pouvoir être raccordé par coulissement au mini-four (403, 503) et pour former au moins une partie de la porte (405, 505) lorsqu'il est raccordé au mini-four (403, 503), ou
- l'élément couvrant (5, 105, 205, 305) étant dimensionné et façonné de telle sorte qu'au moins une partie de l'élément couvrant (5, 105, 205, 305) puisse être placée entre la cavité de cuisson (9, 109, 209) et la porte (15, 115, 215) lorsque la porte (15, 115, 215) se trouve dans la seconde position, et l'élément couvrant (5, 105, 205, 305, 405, 505) étant en outre dimensionné et façonné de façon à limiter l'accès à la cavité de cuisson (9, 109, 209, 409, 509) par l'ouverture (11, 111, 211, 411, 511) lorsqu'il est raccordé au mini-four (3, 103, 203, 403, 503).

2. Ensemble formant mini-four (1, 101, 201, 401, 501) selon la revendication 1, dans lequel un ou plusieurs moyens de raccordement (25, 125, 225, 325, 425, 525) sont positionnés à des fins de raccordement de l'élément couvrant (5, 105, 205, 305, 405, 505) au mini-four (3, 103, 203, 403, 503) de telle sorte que, lors du raccordement au mini-four (3, 103, 203, 403, 503), l'élément couvrant (5, 105, 205, 305, 405, 505) s'étende en travers d'une région supérieure de l'ouverture (11, 111, 211, 411, 511).

3. Ensemble formant mini-four (1, 101, 201, 401, 501) selon la revendication 1 ou la revendication 2, dans lequel un ou plusieurs moyens de raccordement (25, 125, 225, 325, 425, 525) sont positionnés à des fins de raccordement de l'élément couvrant (5, 105, 205, 305, 405, 505) à une partie supérieure du mini-four (3, 103, 203, 403, 503).

4. Ensemble formant mini-four (1, 101, 201, 401, 501) selon l'une quelconque des revendications précédentes, dans lequel au moins un moyen de raccordement (25, 125, 225) comprend une partie de l'élément couvrant (5, 105, 205) façonnée de façon à coopérer avec une partie de forme complémentaire (27, 127, 227, 427, 527) du mini-four (3, 103, 203, 403, 503).

5. Ensemble formant mini-four (1, 101, 201, 401, 501) selon la revendication 4, dans lequel au moins un moyen de raccordement (125, 225, 325, 425, 525) comprend un bord de l'élément couvrant (105, 205, 305, 405, 505) façonné de façon à coopérer avec une gorge, une fente ou une rainure (127, 227, 427, 527) du mini-four (103, 203, 403, 503).

6. Ensemble formant mini-four (1, 101, 201, 401, 501) selon l'une quelconque des revendications précédentes, dans lequel au moins un moyen de raccordement (25) comprend un orifice en forme de trou de serrure destiné à recevoir une saillie (27) de forme complémentaire s'étendant à partir du mini-four (3).

7. Ensemble formant mini-four (1, 101, 201, 401, 501) selon l'une quelconque des revendications précédentes, dans lequel ladite au moins une partie de l'élément couvrant (5, 105, 205, 305, 405, 505) comprend une plaque de matériau.

8. Ensemble formant mini-four (1, 101, 201, 401, 501) selon la revendication 7, dans lequel la plaque de matériau est suffisamment fine pour se loger entre la porte (15, 115, 215) et la cavité de cuisson (9, 109, 209) lorsque la porte (15, 115, 215) se trouve dans la seconde position.

9. Ensemble formant mini-four (1, 101, 201, 401, 501) selon l'une quelconque des revendications précédentes, comprenant en outre une poignée (23, 123, 223, 323a, 323b, 423, 523) permettant de saisir et de manipuler l'élément couvrant (5, 105, 205, 305, 405, 505).

10. Ensemble formant mini-four (1, 101, 201, 401, 501) selon la revendication 9, dans lequel au moins une partie de la poignée (23, 123, 223, 323a, 323b) est positionnée de telle sorte que, lorsque l'élément couvrant (5, 105, 205, 305) est raccordé au mini-four (3, 103, 203) et disposé entre la cavité de cuisson (9, 109, 209) et la porte (15, 115, 215), lorsque la porte (15, 115, 215) se trouve dans la seconde position, au moins une partie de la poignée (23, 123, 223) se trouve à l'extérieur du mini-four (3, 103, 203).

11. Ensemble formant mini-four (1, 101, 201, 401, 501) selon l'une quelconque des revendications précédentes, dans lequel au moins un moyen de raccordement (227) du mini-four (203) est amovible.

## Patentansprüche

1. Miniofen bildende Anordnung (1, 101, 201, 401, 501), umfassend einen Miniofen (3, 103, 203, 403, 503) und ein Abdeckelement (5, 105, 205, 305, 405, 505), wobei der Miniofen (3, 103, 203, 403, 503) einen von der Außenseite des Ofens durch eine Öffnung (11, 111, 211, 411, 511) zugänglichen Backraum (9, 109, 209, 409, 509), eine Tür (15, 115, 215, 405, 515), die imstande ist, zwischen einer ersten Position, in der Zugang zum Backraum (9, 109, 209, 409, 509) von der Außenseite des Ofens durch die Öffnung (11, 111, 211, 411, 511) möglich ist, und einer zweiten Position, in der die Tür (15, 115, 215, 405, 515) den Zugang zum Backraum (9, 109, 209, 409, 509) von der Außenseite des Ofens durch die Öffnung (11, 111, 211, 411, 511) beschränkt, verschoben zu werden, und ein oder mehrere Anschlussmittel (27, 127, 227, 427, 527) umfasst, die dazu vorgesehen sind, mit komplementären Anschlussmitteln (25, 125, 225, 325, 425, 525) eines Abdeckelements (5, 105, 205, 305, 405, 505) zu interagieren, das dazu vorgesehen ist, an den Miniofen (3, 103, 203, 403, 503) angeschlossen zu werden, wobei das Abdeckelement (25, 125, 225, 425, 525) ein oder mehrere Anschlussmittel (25, 125, 225, 425, 525) umfasst, die dazu dienen, das Abdeckelement (5, 105, 205, 305, 405, 505) an ein oder mehrere komplementäre Anschlussmittel (27, 127, 227, 427, 527) des Miniofens (3, 103, 203, 403, 503) anzuschließen, und
- wobei das Abdeckelement (405, 505) so dimensioniert und gestaltet ist, dass es durch Gleiten an den Kleinofen (403, 503) angeschlossen werden kann und um mindestens einen Teil der Tür (405, 505) zu bilden, wenn es am Kleinofen (403, 503) angeschlossen ist, oder
- wobei das Abdeckelement (5, 105, 205, 305) so dimensioniert und gestaltet ist, dass mindestens ein Teil des Abdeckelements (5, 105, 205, 305) zwischen dem Backraum (9, 109, 209) und der Tür (15, 115, 215) platziert werden kann, wenn sich die Tür (15, 115, 215) in der zweiten Position befindet, und wobei das Abdeckelement (5, 105, 205, 305, 405, 505) weiter derart dimensioniert und gestaltet ist, dass es den Zugang zum Backraum (9, 109, 209, 409, 509) durch die Öffnung (11, 111, 211, 411, 511) begrenzt, wenn es am Kleinofen (3, 103, 203, 403, 503) angeschlossen ist.

2. Kleinofen bildende Anordnung (1, 101, 201, 401, 501) nach Anspruch 1, wobei ein oder mehrere Anschlussmittel (25, 125, 225, 325, 425, 525) zum Zwecke des Anschlusses des Abdeckelements (5, 105, 205, 305, 405, 505) an den Miniofen (3, 103, 203, 403, 503) derart positioniert sind, dass sich das Abdeckelement (5, 105, 205, 305, 405, 505) beim Anschluss an den Miniofen (3, 103, 203, 403, 503) quer zu einem oberen Bereich der Öffnung (11, 111, 211, 411, 511) erstreckt.

3. Kleinofen bildende Anordnung (1, 101, 201, 401, 501) nach Anspruch 1 oder Anspruch 2, wobei ein oder mehrere Anschlussmittel (25, 125, 225, 325, 425, 525) zum Zwecke des Anschlusses des Abdeckelements (5, 105, 205, 305, 405, 505) an einen oberen Teil des Miniofens (3, 103, 203, 403, 503) positioniert sind.

4. Kleinofen bildende Anordnung (1, 101, 201, 401, 501) nach einem der vorstehenden Ansprüche, wobei mindestens ein Anschlussmittel (25, 125, 225) einen Teil des Abdeckelements (5, 105, 205) derart gestaltet umfasst, dass er mit einem Teil mit komplementärer Form (27, 127, 227, 427, 527) des Miniofens (3, 103, 203, 403, 503) zusammenwirkt.

5. Kleinofen bildende Anordnung (1, 101, 201, 401, 501) nach Anspruch 4, wobei mindestens ein Anschlussmittel (125, 225, 325, 425, 525) einen Rand des Abdeckelements (105, 205, 305, 405, 505) derart gestaltet umfasst, dass er mit einem Hals, einem Schlitz oder einer Nut (127, 227, 427, 527) des Miniofens (103, 203, 403, 503) zusammenwirkt.

6. Kleinofen bildende Anordnung (1, 101, 201, 401, 501) nach einem der vorstehenden Ansprüche, wobei mindestens ein Anschlussmittel (25) eine Aussparung in Form eines Schlüssellochs umfasst, die dazu vorgesehen ist, einen Vorsprung (27) mit komplementärer Form aufzunehmen, der sich vom Miniofen (3) ausgehend erstreckt.

7. Kleinofen bildende Anordnung (1, 101, 201, 401, 501) nach einem der vorstehenden Ansprüche, wobei der mindestens eine Teil des Abdeckelements (5, 105, 205, 305, 405, 505) eine Materialplatte umfasst.

8. Kleinofen bildende Anordnung (1, 101, 201, 401, 501) nach Anspruch 7, wobei die Materialplatte ausreichend dünn ist, um zwischen der Tür (15, 115, 215) und dem Backraum (9, 109, 209) untergebracht zu werden, wenn sich die Tür (15, 115, 215) in der zweiten Position befindet.

9. Kleinofen bildende Anordnung (1, 101, 201, 401, 501) nach einem der vorstehenden Ansprüche, weiter einen Griff (23, 123, 223, 323a, 323b, 423, 523) umfassend, der erlaubt, das Abdeckelement (5, 105, 205, 305, 405, 505) zu greifen und zu handhaben.

10. Kleinofen bildende Anordnung (1, 101, 201, 401, 501) nach Anspruch 9, wobei mindestens ein Teil des Griffs (23, 123, 223, 323a, 323b) derart positioniert ist, dass, wenn das Abdeckelement (5, 105, 205, 305) am Miniofen (3, 103, 203) angeschlossen ist und zwischen dem Backraum (9, 109, 209) und der Tür (15, 115, 215) angeordnet ist, wenn sich die Tür (15, 115, 215) in der zweiten Position befindet, mindestens ein Teil des Griffs (23, 123, 223) sich auf der Außenseite des Miniofens (3, 103, 203) befindet.

11. Kleinofen bildende Anordnung (1, 101, 201, 401, 501) nach einem der vorstehenden Ansprüche, wobei mindestens ein Anschlussmittel (227) des Miniofens (203) abnehmbar ist.

## Claims

1. Assembly forming a mini-oven (1, 101, 201, 401, 501) comprising a mini-oven (3, 103, 203, 403, 503) and a covering member (5, 105, 205, 305, 405, 505), the mini-oven (3, 103, 203, 403, 503) comprising a cooking cavity (9, 109, 209, 409, 509) accessible from the outside of the oven by an opening (11, 111, 211, 411, 511), a door (15, 115, 215, 405, 515) able to be moved between a first position, wherein it is possible to access the cooking cavity (9, 109, 209, 409, 509) from the outside of the oven by the opening (11, 111, 211, 411, 511), and a second position, wherein the door (15, 115, 215, 405, 515) restrains the access to the cooking cavity (9, 109, 209, 409, 509) from the outside of the oven by the opening (11, 111, 211, 411, 511), and one or more connectors (27, 127, 227, 427, 527) intended to interact with complementary connectors (25, 125, 225, 325, 425, 525) of a covering member (5, 105, 205, 305, 405, 505) intended to be connect to the mini-oven (3, 103, 203, 403, 503), the covering member (5, 105, 205, 305, 405, 505) comprising one or more connectors (25, 125, 225, 425, 525) used to connect the covering member (5, 105, 205, 305, 405, 505) to one or more complementary connectors (27, 127, 227, 427, 527) of the mini-oven (3, 103, 203, 403, 503), and
- the covering member (405, 505) being constructed and arranged to be able to be connected by sliding to the mini-oven (403, 503) and to form at least one portion of the door (405, 505) when it is connected to the mini-door (403, 503), or
- the covering member (5, 105, 205, 305) being constructed and arranged in such a way that at least one portion of the covering member (5, 105, 205, 305) can be placed between the cooking cavity (9, 109, 209) and the door (15, 115, 215) when the door (15, 115, 215) is in the second position, and the covering member (5, 105, 205, 305, 405, 505) being furthermore constructed and arranged in such a way as to limit the access to the cooking cavity (9, 109, 209, 409, 509) by the opening (11, 111, 211, 411, 511) when it is connected to the mini-over (3, 103, 203, 403, 503).

2. Assembly forming a mini-oven (1, 101, 201, 401, 501) according to claim 1, wherein one or more connectors (25, 125, 225, 325, 425, 525) are positioned for the purposes of connecting the covering member (5, 105, 205, 305, 405, 505) to the mini-oven (3, 103, 203, 403, 503) in such a way that, during the connecting of the mini-oven (3, 103, 203, 403, 503), the covering element (5, 105, 205, 305, 405, 505) extends through an upper region of the opening (11, 111, 211, 411, 511).

3. Assembly forming a mini-oven (1, 101, 201, 401, 501) according to claim 1 or claim 2, wherein one or more connectors (25, 125, 225, 325, 425, 525) are positioned for the purpose of connecting the covering member (5, 105, 205, 305, 405, 505) to an upper portion of the mini-oven (3, 103, 203, 403, 503).

4. Assembly forming a mini-oven (1, 101, 201, 401, 501) according to any of the the preceding claims, wherein at least one connector (25, 125, 225) comprises a portion of the covering member (5, 105, 205) arranged in such a way as to cooperate with a portion of complementary shape (27, 127, 227, 427, 527) of the mini-oven (3, 103, 203, 403, 503).

5. Assembly forming a mini-oven (1, 101, 201, 401, 501) according to claim 4, wherein at least one connector (125, 225, 325, 425, 525) comprises an edge of the covering member (105, 205, 305, 405, 505) arranged in such a way as to cooperate with a channel, a slot or a groove (127, 227, 427, 527) of the mini-oven (103, 203, 403, 503).

6. Assembly forming a mini-oven (1, 101, 201,401, 501) according to any of the the preceding claims, wherein at least one connector (25) comprises an orifice in the shape of a keyhole intended to receive a protrusion (27) of complementary shape extending from the mini-oven (3).

7. Assembly forming a mini-oven (1, 101, 201, 401, 501) according to any of the the preceding claims, wherein said at least one portion of the covering member (5, 105, 205, 305, 405, 505) comprises a plate of material.

8. Assembly forming a mini-oven (1, 101, 201, 401, 501) according to claim 7, wherein the plate of material is sufficiently thin to be housed between the door (15, 115, 215) and the cooking cavity (9, 109, 209) when the door (15, 115, 215) is in the second position.

9. Assembly forming a mini-oven (1, 101, 201,401, 501) according to any of the the preceding claims, further comprising a handle (23, 123, 223, 323a, 323b, 423, 523) making it possible to grasp and to manipulate the covering member (5, 105, 205, 305, 405, 505).

10. Assembly forming a mini-oven (1, 101, 201, 401, 501) according to claim 9, wherein at least one portion of the handle (23, 123, 223, 323a, 323b) is positioned in such a way that, when the covering member (5, 105, 205, 305) is connected to the mini-oven (3, 103, 203) and disposed between the cooking cavity (9, 109, 209) and the door (15, 115, 215), when the door (15, 115, 215) is in the second position, at least a portion of the handle (23, 123, 223) is outside the mini-oven (3, 103, 203).

11. Assembly forming a mini-oven (1, 101, 201, 401, 501) according to any of the the preceding claims, wherein at least one connector (227) of the mini-oven (203) is removable.
